# EUROPÄISCHE PATENTSCHRIFT

(11) **EP 1 068 411 B1**
(45) Veröffentlichungstag und Bekanntmachung des Hinweises auf die Patenterteilung: **05.03.2003**
(21) Anmeldenummer: 99917779.3
(22) Anmeldetag: 10.03.1999
(51) Int. Cl.: E04D 5/10, E04B 1/66, B32B 25/10

(54) **DICHTUNGSBAHN**
SEALING STRIP
BANDE D'ETANCHEITE

(30) Priorität: 30.03.1998 DE 19813878; 13.07.1998 DE 19831040
(43) Veröffentlichungstag der Anmeldung: 17.01.2001
(73) Patentinhaber: PHOENIX AKTIENGESELLSCHAFT, 21079 Hamburg (DE)
(72) Erfinder: ALBERS, Günter, D-21079 Hamburg (DE); ALBITZ, Rainer, D-21075 Hamburg (DE); SOCHOR, Josef, D-22175 Hamburg (DE); TONN, Hasso, D-21614 Buxtehude (DE)
(86) Internationale Anmeldenummer: DE9900634
(87) Internationale Veröffentlichungsnummer: WO99050513

(56) Entgegenhaltungen:
- EP-A- 0 622 180
- DE-A- 3 342 560
- DE-A- 3 940 727
- FR-A- 2 355 964
- GB-A- 2 094 226

## Beschreibung

Die Erfindung betrifft eine mehrschichtige Dichtungsbahn, umfassend wenigstens
- eine Mittelschicht aus elastomerem Werkstoff, insbesondere auf Basis von EPDM oder IIR, die beide vernetzt sind;
- einen in die Mittelschicht eingebetteten Festigkeitsträger, der zumeist etwa mittig angeordnet ist und aus einem Glasgelege, Glasvollgewebe oder einem Gelege aus einem ausgeschrumpften Polyester besteht; sowie
- eine Oberschicht und Unterschicht, die jeweils an die Mittelschicht angrenzen.

Eine gattungsgemäße Dichtungsbahn ist beispielsweise aus der deutschen Patentschrift DE-A-33 42 560 bekannt. Dabei sind die Oberschicht und Unterschicht aus unterschiedlichen Gemischen aufgebaut, wobei die Unterschicht Bitumen enthält. Bei der thermischen Nahtfügung, die bei Temperaturen um etwa 600°C erfolgt, können bei derartigen Dichtungsbahnen Pyrolyseprodukte auftreten, die letztlich eine dauerhafte Nahtverbindung verhindern. Außerdem war die farbige Oberflächengestaltung nicht oder nur beschränkt möglich. Darüber hinaus war durch den uneinheitlichen Aufbau ein Anbinden der Dichtungsbahn an andere Bauteile nur unter erschwerten Bedingungen möglich.

Zwecks Überwindung dieses Problemkreises wird nun gemäß Kennzeichen des Patentanspruches 1 eine Dichtungsbahn vorgeschlagen, bei der
- die Oberschicht und Unterschicht jeweils bitumenfrei sind und ferner jeweils aus einem Gemisch bestehen, das aliphatische und aromatische Kohlenwasserstoffharze sowie Polymere auf Basis von SBS in Verbindung mit SEBS und/oder SEPS sowie gegebenenfalls weitere Zusatzstoffe umfaßt.

Zweckmäßige Mischungsparameter der erfindungsgemäßen Dichtungsbahn nach den Patentansprüchen 2 bis 9 sind:
- Die Oberschicht und Unterschicht enthalten 15 bis 40 Gew.-%, insbesondere 20 bis 30 Gew.-%, aliphatische und aromatische Kohlenwasserstoffharze.
- Die Oberschicht und Unterschicht enthalten femer 5 bis 20 Gew.-%, insbesondere 8 bis 15 Gew.-%, SBS sowie 2 bis 20 Gew.-%, insbesondere 4 bis 15 Gew.-%, SEBS und/oder SEPS, wobei weiterhin insbesondere folgendes Polymerverhältnis gilt:
   SBS : SEBS und/oder SEPS = 1 : 1 bis 1 : 1,5.
- Die Oberschicht und Unterschicht enthalten zusätzlich EPDM oder SBR, wobei der Anteil dieser Komponenten 1 bis 15 Gew.-%, insbesondere 2 bis 7 Gew.-%, beträgt. EPDM und SBR sind dabei unvernetzt.
- Die Oberschicht und Unterschicht enthalten zusätzlich Füllstoffe, Weichmacher und Alterungsschutzmittel.
   In Verbindung mit einer Farbgebung, beispielsweise steingrau, werden zudem farbgebende Substanzen, insbesondere Pigmente, beigemischt.
- Die Oberschicht und die Unterschicht weisen die gleiche Zusammensetzung des Gemisches auf, und zwar sowohl qualitativ wie auch quantitativ.

Zweckmäßige Konstruktionsparameter der erfindungsgemäßen Dichtungsbahn nach den Patentansprüchen 10 bis 17 sind:
- Die Oberschicht und Unterschicht weisen die gleiche Dicke auf, wobei die Mittelschicht 20 bis 60 %, insbesondere 30 bis 40 %, der Gesamtdicke der Dichtungsbahn ausmachen, und zwar bezogen auf den Schichtenaufbau, der die Mittelschicht, Oberschicht und Unterschicht umfaßt.
- Die Oberschicht und Unterschicht weisen eine Dessinierung oder Prägung auf.
- Die Oberschicht ist mit einer reflektierenden Schutzschicht abgedeckt, und zwar zwecks Reflektierung von Licht- und Wärmestrahlen. Dabei besteht die Schutzschicht vorzugsweise aus einer Folie oder einem Lackauftrag, insbesondere auf Basis von Aluminium. Die Schutzschicht mit einer Dicke von maximal 10 µm wird nachträglich aufgebracht und ist gegebenenfalls eingefärbt.
- Darüber hinaus ist die Unterschicht zwecks Verhinderung des Zusammenklebens mit einer integrierten Trennschicht, vorzugsweise mit einer Folie, versehen, die insbesondere eine PE-, PP-, PA-, E- oder PU-Folie ist. Diese Trennschicht ist primär für den Transport und die Lagerung gedacht.

Eine weitere zweckmäßige Ausführungsform der erfindungsgemäßen Dichtungsbahn besteht darin, diese selbstklebend auszurüsten, indem gemäß Patentanspruch 18
- die bitumenfreie Unterschicht vollflächig oder partiell mit einer selbstklebenden Bitumenbeschichtung abgedeckt ist, wobei die Bitumenbeschichtung polymermodifiziert ist, insbesondere auf Basis von SBS, SIS oder APP, und neben einem klebrigmachenden Harz vorzugsweise noch mit einem Füllstoff vermengt ist.

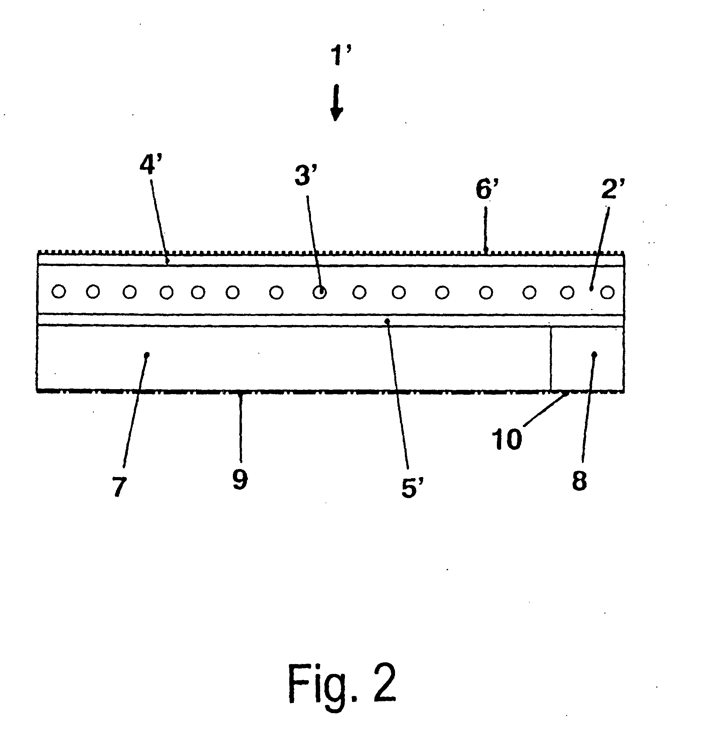

Weitere vorteilhafte Ausführungsformen der selbstklebenden Dichtungsbahn sind in den Patentansprüchen 19 bis 26 genannt, wobei zudem auf die Beschreibung der Fig. 2 verwiesen wird.

Die erfindungsgemäße Dichtungsbahn kann auf jedem Untergrund verlegt werden, beispielsweise auf Beton, Gußasphalt oder Bitumen.

Die im Rahmen der Beschreibung und Patentansprüche benutzten Kurzbezeichnungen haben folgende Bedeutung:
- EPDM: Ethylen-Propylen-Dien-Mischpolymerisat
- IIR: Butylkautschuk
- SEBS: Styrol-Ethylen-Butylen-Styrol-Mischpolymerisat
- SEPS: Styrol-Ethylen-Propylen-Styrol-Mischpolymerisat
- SBS: Styrol-Butadien-Styrol-Mischpolymerisat
- SIS: Styrol-lsopren-Styrol-Mischpolymerisat
- SBR: Styrol-Butadien-Kautschuk
- APP: ataktisches Polypropylen
- PE: Polyethylen
- PU: Polyurethan
- E: Polyester
- PP: Polypropylen
- PA: Polyamid

Hinsichtlich der Mittelschicht ist EPDM mittels Schwefel oder Peroxiden vernetzt, während die Vernetzung von IIR mittels Schwefel oder einem Harz erfolgt.

Die Mengenangaben in Gew.-% beziehen sich jeweils auf die betreffende Schicht.

Die Erfindung wird nun anhand zweier Ausführungsbeispiele unter Bezug auf schematische Schnittdarstellungen erläutert. Es zeigen:
- Fig. 1: eine Dichtungsbahn ohne selbstklebende Ausführung;
- Fig. 2: eine Dichtungsbahn mit selbstklebender Ausführung.

In Verbindung mit diesen beiden Figuren gilt folgende Bezugsziffernliste:
- 1,1': Dichtungsbahn
- 2,2': Mittelschicht
- 3,3': Festigkeitsträger
- 4, 4': Oberschicht
- 5, 5': Unterschicht
- 6, 6': Dessinierung
- 7: selbstklebende Bitumenbeschichtung
- 8: nichtselbstklebende Bitumenbeschichtung
- 9: Trennschicht unterhalb der selbstklebenden Bitumenbeschichtung
- 10: Trennschicht unterhalb der nichtselbstklebenden Bitumenbeschichtung

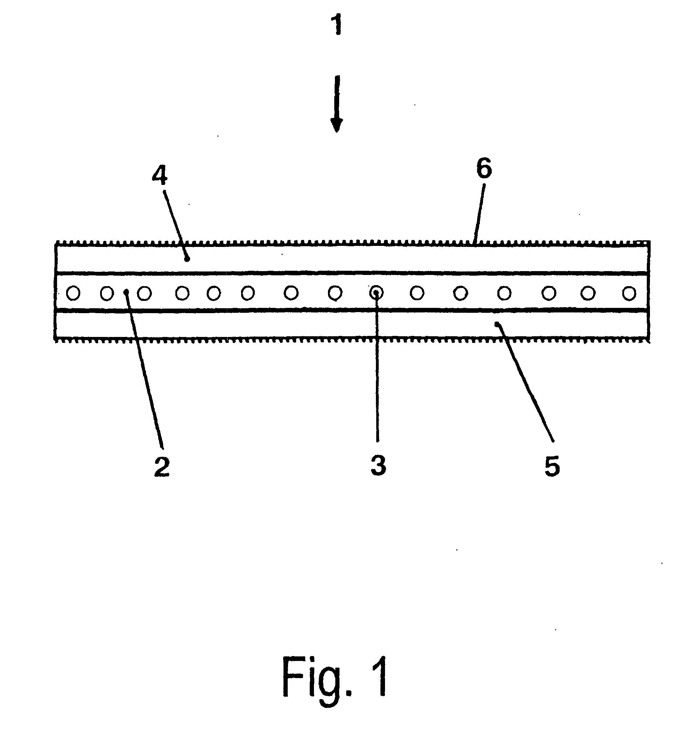

Nach Fig. 1 umfaßt die Dichtungsbahn **1** eine Mittelschicht **2** aus elastomerem Werkstoff, insbesondere auf Basis von EPDM oder IIR, die beide vemetzt sind. In diese Mittelschicht ist ein Festigkeitsträger **3** aus einem Glasgelege, Glasvollgewebe oder einem Gelege aus einem ausgeschrumpften Polyester eingebettet. An die Mittelschicht grenzen eine Oberschicht **4** und Unterschicht **5** an, die jeweils bitumenfrei sind und ferner jeweils aus einem Gemisch bestehen, das aliphatische und aromatische Kohlenwasserstoffharze sowie Polymere auf Basis von SBS in Verbindung mit SEBS und/oder SEPS sowie gegebenenfalls weitere Zusatzstoffe umfaßt. Außerdem sind die Ober- und Unterschicht mit einer Dessinierung **6** versehen.

Fig. 2 zeigt nun eine Dichtungsbahn 1' in selbstklebender Ausführung, wobei hinsichtlich der Schichten **2'**, **3'**, **4'** und **5'** auf die Beschreibung der Fig. 1 verwiesen wird.

Die bitumenfreie Unterschicht 5' ist hier mit zwei Bitumenbeschichtungen **7** und **8** abgedeckt, die in ihrer Zusammensetzung folgende Unterschiede aufweisen:
- Die selbstklebende Bitumenschicht **7** ist polymermodifiziert, insbesondere auf Basis von SBS, SIS oder APP, und neben einem klebrigmachenden Harz vorzugsweise noch mit einem Füllstoff vermengt. Der Bitumenanteil beträgt 50 bis 75 Gew.-%.
- Die nichtselbstklebende Bitumenbeschichtung **8** ist ebenfalls polymermodifiziert, insbesondere wiederum auf Basis von SBS, SIS oder APP, und vorzugsweise noch mit einem Füllstoff vermengt. Das klebrigmachende Harz fehlt jedoch. Der Bitumenanteil beträgt hier 50 bis 70 Gew.-%.

Beide Bitumenbeschichtungen **7** und **8** weisen eine größere Schichtdicke auf als die bitumenfreie Unterschicht **5**. Außerdem sind diese beiden Schichten mit einer Trennschicht **9** und **10** versehen und gegebenenfalls eingefärbt. Die Trennschicht ist dabei jeweils eine Folie, insbesondere eine PE-, PP-, PA-, E- oder PU-Folie. Dabei weist die Trennschicht **9** in Bezug auf die selbstklebende Bitumenbeschichtung **7** eine Dicke von 60 bis 100 µm auf, während die Trennschicht **10** in Bezug auf die nichtselbstklebende Bitumenbeschichtung **8** eine Dicke von 5 bis 20 µm besitzt. Ferner ist es von Vorteil, wenn eine Trennschicht **9** vor dem Verkleben abziehbar ist, während die Trennschicht **10** auch beim Verlegen einen festen Verbund mit der nichtselbstklebenden Bitumenbeschichtung **8** bildet.

Die Oberschicht **4'** ist auch bei dieser Dichtungsbahn mit einer Dessinierung **6'** versehen.

## Patentansprüche

1. Mehrschichtige Dichtungsbahn (1,1'), umfassend wenigstens
- eine Mittelschicht (2, 2') aus elastomerem Werkstoff, insbesondere auf Basis von EPDM oder IIR, die beide vernetzt sind;
- einen in die Mittelschicht (2, 2') eingebetteten Festigkeitsträger (3, 3'), der zumeist etwa mittig angeordnet ist und aus einem Glasgelege, Glasvollgewebe oder einem Gelege aus einem ausgeschrumpften Polyester besteht; sowie
- eine Oberschicht (4, 4') und Unterschicht (5, 5'), die jeweils an die Mittelschicht (2, 2') angrenzen;
**dadurch gekennzeichnet, daß**
- die Oberschicht (4, 4') und Unterschicht (5, 5') jeweils bitumenfrei sind und ferner jeweils aus einem Gemisch bestehen, das aliphatische und aromatische Kohlenwasserstoffharze sowie Polymere auf Basis von SBS in Verbindung mit SEBS und/oder SEPS sowie gegebenenfalls weitere Zusatzstoffe umfaßt.

2. Dichtungsbahn nach Anspruch 1, **dadurch gekennzeichnet, daß** die Oberschicht (4, 4') und Unterschicht (5, 5') 15 bis 40 Gew.-%, insbesondere 20 bis 30 Gew.-%, aliphatische und aromatische Kohlenwasserstoffharze enthalten.

3. Dichtungsbahn nach Anspruch 1 oder 2, **dadurch gekennzeichnet, daß** die Oberschicht (4, 4') und Unterschicht (5, 5') hinsichtlich SBS in Verbindung mit SEBS und/oder SEPS folgende Mengenanteile aufweist:
SBS 5 bis 20 Gew.-%, insbesondere 8 bis 15 Gew.-%
SEBS und/oder SEPS 2 bis 20 Gew.-%, insbesondere 4 bis 15 Gew.-%

4. Dichtungsbahn nach einem der Ansprüche 1 bis 3, **dadurch gekennzeichnet, daß** hinsichtlich SBS in Verbindung mit SEBS und/oder SEPS folgendes Polymerverhältnis gilt:
SBS : SEBS und/oder SEPS = 1:1 bis 1:1,5

5. Dichtungsbahn nach einem der Ansprüche 1 bis 4, **dadurch gekennzeichnet, daß** die Oberschicht (4, 4') und Unterschicht (5, 5') zusätzlich EPDM oder SBR enthalten, wobei EPDM und SBR unvernetzt sind.

6. Dichtungsbahn nach Anspruch 5, **dadurch gekennzeichnet, daß** der Mengenanteil an EPDM oder SBR 1 bis 15 Gew.-%, insbesondere 2 bis 7 Gew.-%, beträgt.

7. Dichtungsbahn nach einem der Ansprüche 1 bis 6, **dadurch gekennzeichnet, daß** die Oberschicht (4, 4') und Unterschicht (5, 5') zusätzlich Füllstoffe, Weichmacher und Alterungsschutzmittel enthalten.

8. Dichtungsbahn nach einem der Ansprüche 1 bis 7, **dadurch gekennzeichnet, daß** die Oberschicht (4, 4') und Unterschicht (5, 5') farbgebende Substanzen, insbesondere Pigmente, enthalten.

9. Dichtungsbahn nach einem der Ansprüche 1 bis 8, **dadurch gekennzeichnet, daß** die Oberschicht (4, 4') und die Unterschicht (5, 5') die gleiche Zusammensetzung des Gemisches aufweisen, und zwar sowohl qualitativ wie auch quantitativ.

10. Dichtungsbahn nach einem der Ansprüche 1 bis 9, **dadurch gekennzeichnet, daß** die Oberschicht (4, 4') und die Unterschicht (5, 5') die gleiche Dicke aufweisen.

11. Dichtungsbahn nach einem der Ansprüche 1 bis 10, **dadurch gekennzeichnet, daß** die Mittelschicht (2, 2') 20 bis 60 %, insbesondere 30 bis 40 %, der Gesamtdicke der Dichtungsbahn ausmachen, und zwar bezogen auf den Schichtenaufbau, der die Mittelschicht (2, 2'), Oberschicht (4, 4') und Unterschicht (5, 5') umfaßt.

12. Dichtungsbahn nach einem der Ansprüche 1 bis 11, **dadurch gekennzeichnet, daß** die Oberschicht (4, 4') und/oder die Unterschicht (5, 5') eine Dessinierung (6, 6') oder Prägung aufweisen.

13. Dichtungsbahn nach einem der Ansprüche 1 bis 12, **dadurch gekennzeichnet, daß** die Oberschicht (4, 4') von einer reflektierenden Schutzschicht abgedeckt ist, die vorzugsweise nachträglich aufgebracht wird und die gegebenenfalls eingefärbt ist.

14. Dichtungsbahn nach Anspruch 13, **dadurch gekennzeichnet, daß** die Schutzschicht eine Folie oder ein Lackauftrag ist, insbesondere auf Basis von Aluminium.

15. Dichtungsbahn nach Anspruch 13 oder 14, **dadurch gekennzeichnet, daß** die Schutzschicht eine Dicke von maximal 10 µm aufweist.

16. Dichtungsbahn nach einem der Ansprüche 1 bis 15, **dadurch gekennzeichnet, daß** die Unterschicht (5) mit einer Trennschicht versehen ist, die insbesondere in die Unterschicht integriert und gegebenenfalls eingefärbt ist.

17. Dichtungsbahn nach Anspruch 16, **dadurch gekennzeichnet, daß** die Trennschicht eine Folie, insbesondere eine PE-, PP-, PA-, E- oder PU-Folie, ist.

18. Dichtungsbahn nach einem der Ansprüche 1 bis 15, **dadurch gekennzeichnet, daß** diese selbstklebend ausgerüstet ist, indem die bitumenfreie Unterschicht (5') vollflächig oder partiell mit einer selbstklebenden Bitumenbeschichtung (7) abgedeckt ist, wobei die Bitumenbeschichtung polymermodifiziert ist, insbesondere auf Basis von SBS, SIS oder APP, und neben einem klebrigmachenden Harz vorzugsweise noch mit einem Füllstoff vermengt ist.

19. Dichtungsbahn nach Anspruch 18, **dadurch gekennzeichnet, daß** die selbstklebende Bitumenbeschichtung (7) einen Bitumenanteil von 50 bis 75 Gew.-% aufweist.

20. Dichtungsbahn nach Anspruch 18 oder 19, **dadurch gekennzeichnet, daß** die bitumenfreie Unterschicht (5') bei einer partiellen Abdeckung mit einer selbstklebenden Bitumenbeschichtung (7) an einem der beiden Seitenbereiche mit einer nichtselbstklebenden Bitumenbeschichtung (8) abgedeckt ist, wobei die Bitumenbeschichtung polymermodifiziert ist, insbesondere auf Basis von SBS, SIS oder APP, und vorzugsweise noch mit einem Füllstoff vermengt ist.

21. Dichtungsbahn nach Anspruch 20, **dadurch gekennzeichnet, daß** die nichtselbstklebende Bitumenbeschichtung (8) einen Bitumenanteil von 50 bis 70 Gew.-% aufweist.

22. Dichtungsbahn nach einem der Ansprüche 18 bis 21, **dadurch gekennzeichnet, daß** die selbstklebende Bitumenbeschichtung (7) und die nichtselbstklebende Bitumenbeschichtung (8) eine größere Schichtdicke aufweisen als die bitumenfreie Unterschicht (5').

23. Dichtungsbahn nach einem der Ansprüche 18 bis 22, **dadurch gekennzeichnet, daß** die selbstklebende Bitumenbeschichtung (7) und die nichtselbstklebende Bitumenbeschichtung (8) mit einer Trennschicht (9, 10) versehen sind und gegebenenfalls eingefärbt sind.

24. Dichtungsbahn nach Anspruch 23, **dadurch gekennzeichnet, daß** die Trennschicht (9, 10) eine Folie, insbesondere eine PE-, PP-, PA-, E- oder PU-Folie, ist.

25. Dichtungsbahn nach Anspruch 23 oder 24, **dadurch gekennzeichnet, daß** die Trennschicht (9) in Bezug auf die selbstklebende Bitumenbeschichtung (7) eine Dicke von 60 bis 100 µm und die Trennschicht (10) in Bezug auf die nichtselbstklebende Bitumenbeschichtung (8) eine Dicke von 5 bis 20 µm aufweisen.

26. Dichtungsbahn nach einem der Ansprüche 23 bis 25, **dadurch gekennzeichnet, daß** die Trennschicht (9) in Bezug auf die selbstkfebende Bitumenbeschichtung (7) vor dem Verlegen abziehbar ist, während die Trennschicht (10) in Bezug auf die nichtselbstklebende Bitumenbeschichtung (8) auch beim Verlegen einen festen Verbund mit dieser bildet.

## Claims

1. Multi-layer sealing strip (1, 1'), comprising at least
- a middle layer (2, 2') made of elastomer material, in particular based on EPDM or IIR, both of which are cross-linked;
- a strength member (3, 3') which is embedded in the middle layer (2, 2') and is usually disposed roughly in the middle and consists of a glass inlay, solid glass fabric or an inlay made of a shrunken polyester, and
- an upper layer (4, 4') and a lower layer (5, 5'), each of which bound the middle layer (2, 2'),
**characterised in that**
- the upper layer (4, 4') and the lower layer (5, 5') are each bitumen-free and further each consist of a mixture which comprises aliphatic and aromatic hydrocarbon resins and polymers based on SBS in combination with SEBS and/or SEPS and possibly further additives.

2. Sealing strip according to claim 1, **characterised in that** the upper layer (4, 4') and the lower layer (5, 5') contain 15 to 40% by weight, in particular 20 to 30% by weight, of aliphatic and aromatic hydrocarbon resins.

3. Sealing strip according to claim 1 or 2,
**characterised in that** the upper layer (4, 4') and the lower layer (5, 5') exhibit the following proportions as regards SBS in combination with SEBS and/or SEPS:
SBS 5 to 20% by weight, in particular 8 to 15% by weight, SEBS and/or SEPS 2 to 20% by weight, in particular 4 to 15% by weight.

4. Sealing strip according to one of claims 1 to 3,
**characterised in that** the following polymer ratio applies as regards SBS in combination with SEBS and/or SEPS:
SBS : SEBS and/or SEPS = 1:1 to 1:1.5.

5. Sealing strip according to one of claims 1 to 4,
**characterised in that** the upper layer (4, 4') and the lower layer (5, 5') additionally contain EPDM or SBR, the EPDM and SBR not being cross-linked.

6. Sealing strip according to claim 5, **characterised in that** the proportion of EPDM or SBR is 1 to 15% by weight, in particular 2 to 7% by weight.

7. Sealing strip according to one of claims 1 to 6,
**characterised in that** the upper layer (4, 4') and the lower layer (5, 5') additionally contain fillers, plasticisers and ageing inhibitors.

8. Sealing strip according to one of claims 1 to 7,
**characterised in that** the upper layer (4, 4') and the lower layer (5, 5') contain colouring substances, in particular pigments.

9. Sealing strip according to one of claims 1 to 8,
**characterised in that** the upper layer (4, 4') and the lower layer (5, 5') exhibit the same mixture composition, both qualitatively and quantitatively.

10. Sealing strip according to one of claims 1 to 9,
**characterised in that** the upper layer (4, 4') and the lower layer (5, 5') exhibit the same thickness.

11. Sealing strip according to one of claims 1 to 10,
**characterised in that** the middle layer (2, 2') makes up 20 to 60%, in particular 30 to 40%, of the overall thickness of the sealing strip, related to the layer system which comprises the middle layer (2, 2'), upper layer (4, 4') and lower layer (5, 5').

12. Sealing strip according to one of claims 1 to 11,
**characterised in that** the upper layer (4, 4') and/or the lower layer (5, 5') exhibit a design (6, 6') or imprint.

13. Sealing strip according to one of claims 1 to 12,
**characterised in that** the upper layer (4, 4') is covered by a reflecting protective layer which is preferably applied later and may also be coloured.

14. Sealing strip according to claim 13, **characterised in that** the protective layer is a film or an application of paint, in particular based on aluminium.

15. Sealing strip according to claim 13 or 14,
**characterised in that** the protective layer exhibits a maximum thickness of 10 µm.

16. Sealing strip according to one of claims 1 to 15,
**characterised in that** the lower layer (5) is provided with a backing layer which in particular is incorporated in the lower layer and is possibly coloured.

17. Sealing strip according to claim 16, **characterised in that** the backing layer is a film, in particular a PE, PP, PA, E or PU film.

18. Sealing strip according to one of claims 1 to 15,
**characterised in that** this is made self-adhesive **in that** the bitumen-free lower layer (5') is covered completely or partially with a self-adhesive bitumen coating (7), the bitumen coating being polymer-modified, in particular on the basis of SBS, SIS or APP, and is preferably also mixed with a filler in addition to a tackifying resin.

19. Sealing strip according to claim 18, **characterised in that** the self-adhesive bitumen coating (7) exhibits a proportion of bitumen of 50 to 75% by weight.

20. Sealing strip according to claim 18 or 19,
**characterised in that** when partially covered with a-self-adhesive bitumen coating (7) the bitumen-free lower layer (5') is covered with a non self-adhesive bitumen coating (8) on one of the two side areas, the bitumen coating being polymer-modified, in particular on the basis of SBS, SIS or APP, and preferably also mixed with a filler.

21. Sealing strip according to claim 20, **characterised in that** the non self-adhesive bitumen coating (8) exhibits a proportion of bitumen of 50 to 70% by weight.

22. Sealing strip according to one of claims 18 to 21,
**characterised in that** the self-adhesive bitumen coating (7) and the non self-adhesive bitumen coating (8) exhibit a greater coating thickness than the bitumen-free lower layer (5').

23. Sealing strip according to one of claims 18 to 22,
**characterised in that** the self-adhesive bitumen coating (7) and the non self-adhesive bitumen coating (8) are provided with a backing layer (9, 10) and possibly coloured.

24. Sealing strip according to claim 23, **characterised in that** the backing layer (9, 10) is a film, in particular a PE, PP, PA, E or PU film.

25. Sealing strip according to claim 23 or 24,
**characterised in that** the backing layer (9) in relation to the self-adhesive bitumen coating (7) exhibits a thickness of 60 to 100 µm and the backing layer (10) in relation to the non self-adhesive bitumen coating (8) exhibits a thickness of 5 to 20 µm.

26. Sealing strip according to one of claims 23 to 25,
**characterised in that** the backing layer (9) in relation to the self-adhesive bitumen coating (7) can be detached before laying, whereas the backing layer (10) in relation to the non self-adhesive bitumen coating (8) forms a solid bond with the latter when laid.

## Revendications

1. Bande d'étanchéité (1, 1') multicouche, comprenant au moins
- une couche médiane (2, 2') en matériau élastomère, en particulier à base de EPDM ou de IIR, les deux étant réticulées ;
- un support de résistance (3, 3') incorporé dans la couche médiane (2, 2'), disposée en majeure partie à peu près centralement et formée d'une couche de verre, d'un tissu plein de verre ou d'une couche de polyester rétractée, ainsi que
- une couche supérieure (4, 4') et une couche inférieure (5, 5') se délimitant chacun à la couche médiane (2, 2') ;
**caractérisée en ce que**
- la couche supérieure (4, 4') et la couche inférieure (5, 5') sont chacune exemptes de bitumes et en outre sont chacune formées d'un mélange comprenant des résines d'hydrocarbure aliphatique et aromatique ainsi que des polymères à base de SBS en liaison avec du SEBS et/ou du SEPS ainsi que le cas échéant d'autres additifs.

2. Bande d'étanchéité selon la revendication 1, **caractérisée en ce que** la couche supérieure (4, 4') et la couche inférieure (5, 5') contiennent de 15 à 40 % en poids, en particulier de 20 à 30 % en poids, de résines d'hydrocarbure aliphatique et aromatique.

3. Bande d'étanchéité selon la revendication 1 ou 2, **caractérisée en ce que** la couche supérieure (4, 4') et la couche inférieure (5, 5') présentent du point de vue du SBS en liaison avec le SEBS et/ou du SEPS les proportions quantitatives suivantes :
SBS 5 à 20 % en poids, en particulier 8 à 15 % en poids
SEBS et/ou SEPS 2 à 20 % en poids, en particulier 4 à 15 % en poids

4. Bande d'étanchéité selon l'une des revendications 1 à 3, **caractérisée en ce que** du point de vue du SBS en liaison avec le SEBS et/ou le SEPS, on a le rapport entre polymères suivant :
SBS : SEBS et/ou SEPS = 1 : 1 à 1 : 1,5.

5. Bande d'étanchéité selon l'une des revendications 1 à 4, **caractérisée en ce que** la couche supérieure (4, 4') et la couche inférieure (5, 5') contiennent en plus de l'EPDM ou du SBR, l'EPDM et le SBR étant non réticulés.

6. Bande d'étanchéité selon la revendication 5, **caractérisée en ce que** la proportion quantitative en EPDM ou SBR est de 1 à 15 % en poids, en particulier de 2 à 7 % en poids.

7. Bande d'étanchéité selon l'une des revendications 1 à 6, **caractérisée en ce que** la couche supérieure (4, 4') et la couche inférieure (5, 5') contiennent en plus des charges des plastifiants et des agents de protection contre le vieillissement.

8. Bande d'étanchéité selon l'une des revendications 1 à 7, **caractérisée en ce que** la couche supérieure (4, 4') et la couche inférieure (5, 5') contiennent des substances colorantes en particulier des pigments.

9. Bande d'étanchéité selon l'une des revendications 1 à 8, **caractérisée en ce que** la couche supérieure (4, 4') et la couche inférieure (5, 5') présentent la même composition de mélange et précisément tant qualitativement qu'également quantitativement.

10. Bande d'étanchéité selon l'une des revendications 1 à 9, **caractérisée en ce que** la couche supérieure (4, 4') et la couche inférieure (5, 5') ont la même épaisseur.

11. Bande d'étanchéité selon l'une des revendications 1 à 10, **caractérisée en ce que** la couche médiane (2, 2') fait de 20 à 60 %, en particulier de 30 à 40 % de l'épaisseur totale de la bande d'étanchéité et précisément se référant à la structure en couche qui comprend la couche médiane (2, 2'), la couche supérieure (4, 4') et la couche inférieure (5, 5').

12. Bande d'étanchéité selon l'une des revendications 1 à 11, **caractérisée en ce que** la couche supérieure (4, 4') et/ou la couche inférieure (5, 5') présentent un motif de dessin (6, 6') ou un façonnage tridimensionnel.

13. Bande d'étanchéité selon l'une des revendications 1 à 12, **caractérisée en ce que** la couche supérieure (4, 4') est couverte par une couche protectrice réfléchissante qui de préférence est appliquée après coup et qui est le cas échéant colorée dans la masse.

14. Bande d'étanchéité selon la revendication 13, **caractérisée en ce que** la couche protectrice est une feuille ou une application de vernis, en particulier à base d'aluminium.

15. Bande d'étanchéité selon la revendication 13 ou 14, **caractérisée en ce que** la couche protectrice présente une épaisseur maximale de 10 µm.

16. Bande d'étanchéité selon l'une des revendications 1 à 15, **caractérisée en ce que** la couche inférieure (5) est munie d'une couche de séparation, en particulier intégrée dans la couche inférieure et le cas échéant colorée dans la masse.

17. Bande d'étanchéité selon la revendication 16, **caractérisée en ce que** la couche de séparation est une feuille, en particulier une feuille de PE, PP, PA, E ou PU.

18. Bande d'étanchéité selon l'une des revendications 1 à 15, **caractérisée en ce que** celle-ci est réalisée de façon à être autocollante par le fait que la couche inférieure (5') exempte de bitume est couverte sur toute la surface ou partiellement par un revêtement de bitume (7) autoadhésif, le revêtement bitume étant soumis à une modification des polymères, en particulier à base de SBS, SIS ou APP, et est mélangé outre à une résistance donnante de l'adhésion, de préférence encore à une charge.

19. Bande d'étanchéité selon la revendication 18, **caractérisée en ce que** le revêtement en bitume (17) autocollant présente une proportion de bitume de 50 à 75 % en poids.

20. Bande d'étanchéité selon la revendication 18 ou 19, **caractérisée en ce que** la couche inférieure (5') exempte de bitume en cas de reversement partiel avec un revêtement en bitume (7) autoadhésif est couverte sur l'une des deux zones latérales avec un revêtement en bitume (8) non autoadhésif, le revêtement en bitume étant soumis à une modification des polymères, en particulier à base de SBS, SIS ou APP, et de préférence encore mélangée avec une charge.

21. Bande d'étanchéité selon la revendication 20, **caractérisée en ce que** le revêtement en bitume (8) non autoadhésif présente une proportion de bitume de 50 à 75 % en poids.

22. Bande d'étanchéité selon l'une des revendications 18 à 21, **caractérisée en ce que** le revêtement en bitume (7) autoadhésif et le revêtement en bitume (8) non autoadhésif présentent une épaisseur de couche supérieure à celle de la couche inférieure (5') exempte de bitume.

23. Bande d'étanchéité selon l'une des revendications 18 à 22, **caractérisée en ce que** le revêtement en bitume (7) autoadhésif et le revêtement en bitume (8) non autoadhésif sont munis d'une couche de séparation (9, 10) et le cas échéant sont colorés dans la masse.

24. Bande d'étanchéité selon la revendication 23, **caractérisée en ce que** la couche de séparation (9, 10) est une feuille, en particulier une feuille de PE, PP, PA, E ou PU.

25. Bande d'étanchéité selon la revendication 23 ou 24, **caractérisée en ce que** la couche de séparation (9) par rapport à la couche de bitume (7) autoadhésive à une épaisseur de 60 à 100 µm et la couche de séparation (10) présente par rapport au revêtement en bitume (8) non autoadhésif une épaisseur de 5 à 20 µm.

26. Bande d'étanchéité selon l'une des revendications 23 à 25, **caractérisée en ce que** la couche de séparation (9) peut être étirée avant la pose par rapport au revêtement de bitume (7) autoadhésif tandis que la couche de séparation (10) en référence au revêtement en bitume (8) non autoadhésif forme également à la pose un composite rigide avec celui-ci.
